# EUROPEAN PATENT SPECIFICATION

(11) **EP 1 228 334 B1**
(45) Date of publication and mention of the grant of the patent: **22.09.2004**
(21) Application number: 00976514.0
(22) Date of filing: 08.11.2000
(51) Int. Cl.: F24D 5/10, E04C 1/39

(54) **A DEVICE FOR HEATING OR COOLING OF A BUILDING**
HEIZ- ODER KÜHLANLAGE FÜR EIN GEBÄUDE
DISPOSITIF DE CHAUFFAGE OU DE REFROIDISSEMENT D'UN IMMEUBLE

(30) Priority: 08.11.1999 SE 9904031
(43) Date of publication of application: 07.08.2002
(73) Proprietor: Dunér, Pal, 181 60 Lindingö (SE); Isfält, Engelbrekt, 115 29 Stockholm (SE)
(72) Inventor: Dunér, Pal, 181 60 Lindingö (SE); Isfält, Engelbrekt, 115 29 Stockholm (SE)
(74) Representative: Sundström, Per Olof
(86) International application number: PCT/SE2000/002182
(87) International publication number: WO 2001/035029

(56) References cited:
- EP-A1- 0 758 705
- EP-A2- 0 254 286
- AT-B- 333 468
- AT-B- 358 773
- CH-A5- 677 022
- DE-A1- 3 540 713

## Description

### TECHNICAL FIELD

The present invention relates to a system for heating/cooling buildings of the kind defined in the preamble of claim 1.

### DESCRIPTION OF THE BACKGROUND ART

AT-B-358773 reveals a heating wall comprising a plurality of first rows of first building blocks having vertical holes. The holes are aligned to form vertical channels in the wall. A bottom row of blocks of a second type feed input air into the bottom end of a first group of channels, and separately receives output air from the bottom ends of a second group of channels. Means are provided at the upper end of the wall to connect the first and second groups of channels. Heating means can be provided to heat the input air.

AT-B-333468 reveals a wall formed of building blocks having vertical holes forming vertical air channels in the wall. The channels contain a porous material. Horizontal manifold channels connect to the upper and lower ends respectively of the vertical channels so that the vertical channels of the wall are connected in parallel.

CH-AS-677022 reveals a heating wall comprising a plurality of first rows of building blocks having vertical through-flow holds which are vertically aligned to form vertical air channels, a second lower row, and a third upper row of building blocks which form horizontal manifold channels that are connected to the lower ends and the upper ends respectively of the vertical channels, which thereby are connected in parallel. Heating/cooling means are provided to heat or cool the input air.

There are available in the building construction field a number of heating systems that are based on warm air. These warm air systems are used to heat air which is then delivered to rooms in the building. It has been found, however, that these systems are encumbered with serious technical problems. For example, in some unfortunate circumstances,, microorganisms are able to form in the system channels and therewith create problems with respect to air quality. The basic fault with such systems is that a heating system is combined with a ventilation system.

Flue gas systems, for instance the classic tiled stove and its successors, such as so-called enclosed fireplaces, are based on allowing hot smoke emanating from a fire to pass through channels which, in turn, deliver heat to surrounding-rooms. These systems have a heat source that comprises open fire and that generates very high flue gas temperatures. Although such systems function quite well, they require the provision of expensive technical systems and devices, and can lead to problems. Moreover, environmental conceptions have resulted in greater understanding of the problems created by burning wood on an excessively large scale. Flue gas systems used as a chief means for heating buildings are not found at the present time. Enclosed fireplaces and the like are primarily intended to create a cosy atmosphere.

It is known in practice to use concrete floor structures that include through-penetrating passageways into which attemperated air is introduced and then conducted further into adjacent rooms. This solution is used mainly in office buildings and provides floor and ceiling heating facilities.

It is also known in practice to use a concrete floor structure that has a function similar to the above-mentioned concrete floor structure but which instead of passageways has beneath the bottom and upper edge of the floor structure an open installation space into which warm air is introduced.

The drawbacks with the systems just mentioned can be summarised as consisting in:
- intermixing with ventilation air;
- require a great deal of attendance and care;
- environmental disadvantages in densely built-up areas;
- high air temperatures, resulting in high energy losses;
- high air temperatures which dry out the room air and result in excessive dryness, and
- that the systems are not readily controlled.

### SUMMARY OF THE INVENTION

The object of the present invention is to eliminate the aforesaid drawbacks to the greatest possible extent.

The invention is defined in appended claim 1.

Embodiments of the invention are defined in the appended subclaims.

### BRIEF DESCRIPTION OF THE DRAWINGS

Fig. 1 illustrates an inventive heating/cooling system that includes a continuous heating/cooling path comprised of a plurality of series-connected sub-paths in a wall structure;
Fig. 2 illustrates an inventive heating/cooling system that has a continuous heating/cooling path comprised of a plurality of parallel-connected sub-paths in a wall structure;
Fig. 3 illustrates a building block having through-penetrating holes and included in the wall structure shown in Fig. 1;
Fig. 4 illustrates a building block having through-penetrating holes and included in the wall structure shown in Fig. 2;
Fig. 5 illustrates a U-shaped building block included in the wall structure shown in Figs. 1 and 2;
Fig. 6 illustrates a damper included in the system according to Fig. 2;
Fig. 7 illustrates generally a series-flowchart relating to the system according to Fig. 1; and
Fig. 8 illustrates generally a parallel-flowchart relating to the system according to Fig. 2.

### DESCRIPTION OF PREFERRED EMBODIMENTS

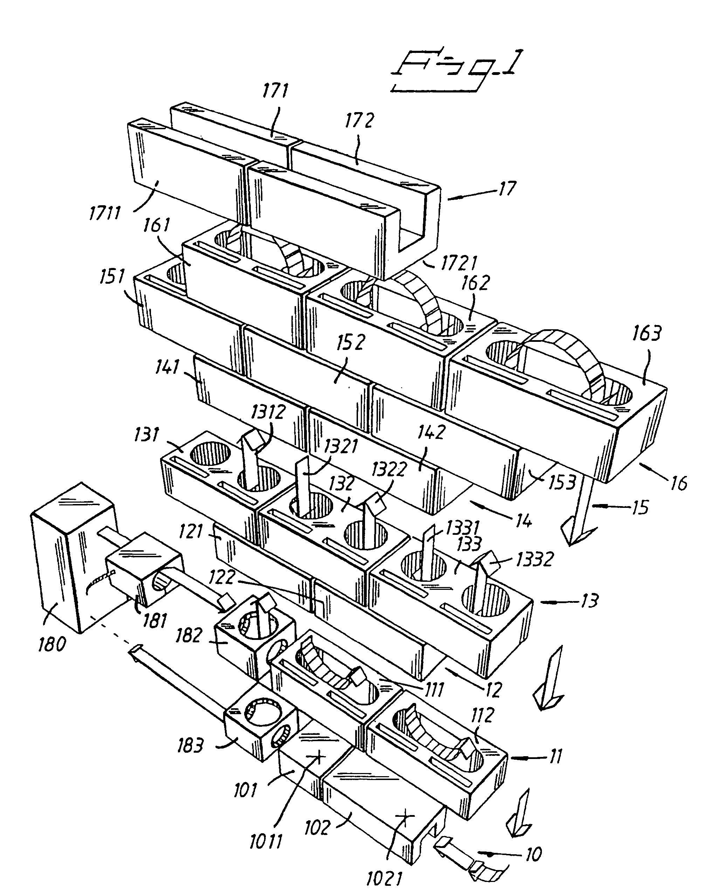

Fig. 1 illustrates schematically part of a wall included in a building heating/cooling system. The illustrated part of the wall includes eight rows of building blocks 10-17, namely a bottom row 10 in which two blocks 101, 102 are shown, a first row 11 having two blocks 111, 112, a second row 12 having two blocks 121, 122, a third row 13 having three blocks 131, 132, 133, a fourth row 14 having two blocks 141, 142, a fifth row 15 having three blocks 151, 152, 153, a sixth row 16 having three blocks 161, 162, 163, and an upper seventh, row 17 in which two blocks 171, 172 are shown. The blocks 101, 102 have a longitudinally extending continuous surface 1011 and 1021 respectively, and the block 171, 172 has a longitudinally extending continuous surface 1711 and 1721 respectively. It is self-apparent that the wall will, in reality, comprise a large number of tightly adjacent building blocks conventionally joined together to form a smooth "brick" surface.

More specifically, the wall is comprised of the bottom row 10 that includes building blocks 101, 102 that lack through-penetrating air-passage holes, but that have said longitudinally extending continuous surfaces 1011-1021 for interconnecting holes in the nearest overlying row 11 that contains building blocks 111, 112, and the upper row 17 including building blocks 171, 172 that also lack through-penetrating holes but that have said longitudinally extending continuous surfaces 1711-1721 for interconnecting holes in the nearest underlying row 16 that includes the building blocks 161, 162, 163.

Building blocks that have through-penetrating holes and building blocks that lack such holes but include a continuous, coherent surface are chosen and positioned relative to each other so as to form a continuous heating/cooling pathway through a plurality of mutually interconnected building blocks that have through-penetrating holes. In the case of the Fig. 1 embodiment, the continuous surfaces 1011-1021 in the blocks 101, 102 of the bottom row 10 are turned to face upwards and the continuous surfaces 1711-1721 in the blocks 171, 172 of the seventh row 17 are turned to face downwards, wherewith the continuous heating/cooling pathway is comprised of a plurality of series-connected sub-pathways, see the row of arrows 1312, 1321, 1322, 1331, 1332, where, for instance, the upwardly extending sub-pathway passes the building blocks 111, 122, 132, 142, 152, 162. Fig. 7 illustrates generally a series-flowchart for systems constructed in accordance with Fig. 1.

A heating/cooling source 180 is connected to the beginning of the heating/cooling pathway via a control device 181 and a coupling device 182. The end of the heating/cooling pathway is connected back to the heating/cooling source 180, via the building blocks 102, 101 and a coupling device 183.

The control device 181 includes an electronic unit designed to control the flow of heating/cooling medium (air) in relation to time, temperature and software which is pre-created individually for each specific object in which the system is included.

The software is a product created from a particularly developed simulation program. When it has been decided that the inventive heating/cooling system shall be used in the construction of a new building, the manufacturer of the heating/cooling system is supplied with data concerning the planned building, such as its geographical location, its design and its use, etc.. These data are entered into the developed simulation program, which, as a result, gives a highly exhaustive energy requirement calculation, the specification of suitable building blocks, etc., with respect to the specific building object. Good economic and technical conditions/requirements are also given with respect to the planned building.

When this is completed, the software (the code) is delivered, said software being based on earlier simulation studies and controls the heating/cooling system in an energy effective manner adapted to the building in question.

Because of the large area of the heat-emitting brick surfaces, the temperature of said surfaces can be kept low and insignificantly above room temperature; compare this with present-day heating systems in which the heat-emitting surfaces maintain a high temperature. A radiator, for instance, maintains a surface temperature of about 60-80°C, resulting in increased dust formation, etc.. The large heat storage ability of the brick also means that the temperature will be uniform, even when the heat supply varies.

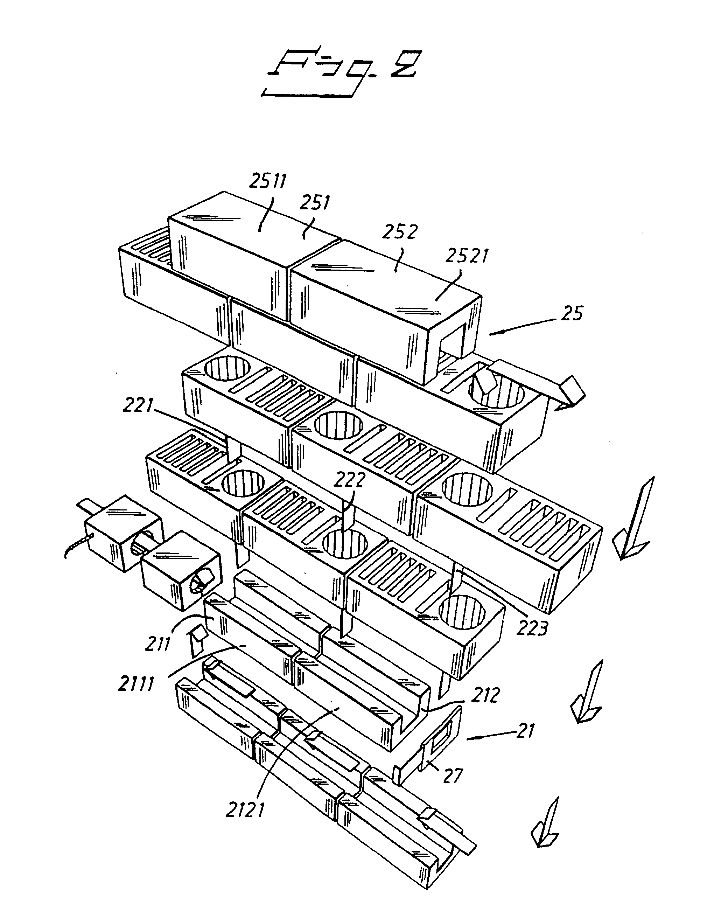

Fig. 2 shows a heating system similar to that shown in Fig. 1, although modified slightly by, for instance, a different choice of building block.

In a first bottom row 21 including two blocks 211, 212, and a fifth upper row 25 including two building blocks 251, 252, the building blocks are U-shaped and have a longitudinally extending continuous surface, which faces downwards in the bottom row 21 (the surface 2111-2121) and upwards in the upper row 25 (the surface 2511-2521). The continuous heating/cooling pathway is therewith comprised of a plurality of parallel-coupled, vertical sub-pathways all of which pass in one and the same direction (upwards). Fig. 8 shows generally a parallel-flowchart for systems constructed in accordance with Fig. 2.

One or more dampers, which have shutters that can be moved into and out of a frame structure provided with through-passing holes for said heating/cooling medium, is/are disposed (bricked-in) transversely to the heating/cooling pathway, wherewith said pathway is divided into separate heating/cooling zones. Fig. 2 and Fig. 6 show one such damper 27 with frame 271 and shutter 272.

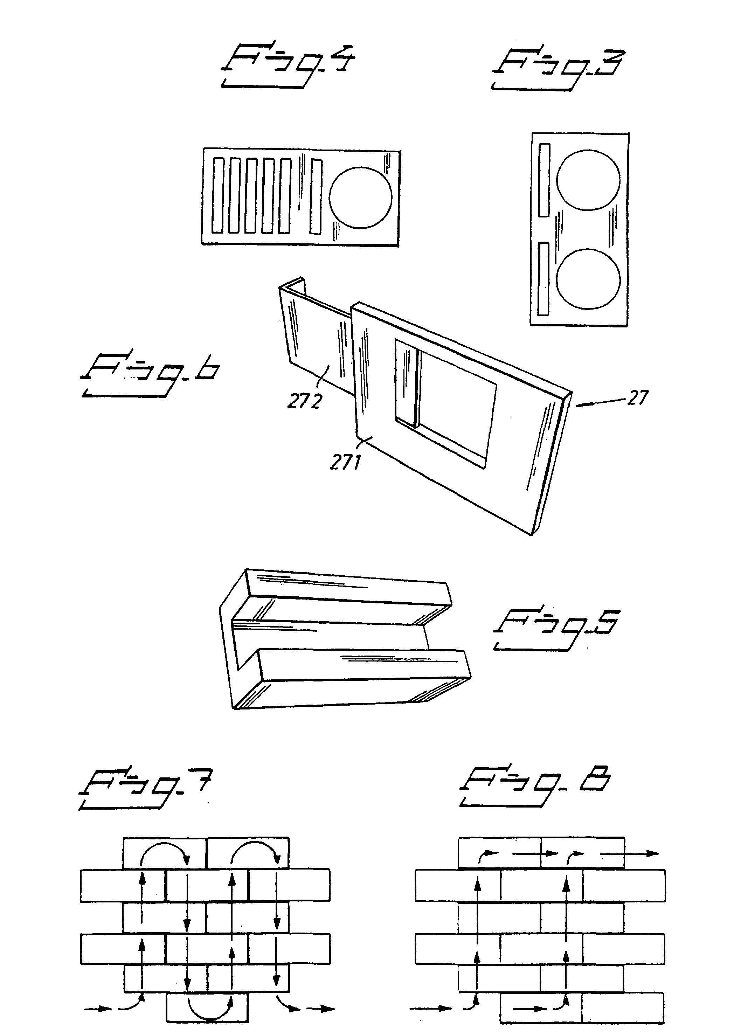

Fig. 3 shows a building block of the kind used in systems according to Fig. 1, and Fig. 4 shows a building block of the kind used in systems according to Fig. 2.

The aforedescribed heating systems and possible modifications thereto afford one or more of the following advantages, depending on external circumstances and practical standpoints in individual cases:
- a large heat-emitting surface area that enables low air temperatures to be maintained in the system;
- a closed air heating system in which room air does not contact heating (heated) air, (heat is delivered by virtue of the wall material, e.g. brick, storing heat and then later delivering heat to adjacent rooms;
- simplified solutions to control problems in conjunction with air heating systems; compare the situation in flue gas systems;
- a large heat-emitting surface area which enables the temperature of room air to be lowered and therewith to retain more of its moisture, resulting in a better indoor climate;
- improved operation reliability (no risk of water leakage);
- lower insulation costs (no radiators) and increased free floor area.

In one embodiment of the invention, for instance the Fig. 1 embodiment, the blocks 101, 102 in row 10 have an upwardly facing, horizontal wall surface that screens off the channels that extend vertically through the blocks 111, 112 of the row 11. The channels of the blocks 111, 112 extend longitudinally in the length direction of the row, so as to be able to bridge two separate vertical channels in the longitudinal direction of said row, said channels being adjacent to the longitudinal direction of the row 12. The blocks in rows 12-15 are mutually the same. The blocks in rows 12-15 are mutually the same and vertically adjacent rows are positioned to ensure that the block joints in one row will be offset in respect of joints in an adjacent row. Furthermore, the blocks in rows 12-15 are shaped so that horizontally adjacent channels in the block will have mutually the same distances along the row, regardless of whether the channels are located in one block or in two adjacent jointed blocks in a row. The blocks in row 16 correspond to the blocks in row 11, and the blocks in row 17 have a downwardly facing, horizontal wall surface which upwardly screens-off the channels in the block 161-163 of row 16, so as to deflect an upwardly directed flow through a series of mutually opposing channels to obtain a downwardly directed flow through a series of mutually opposing channels in a vertical adjacent block.

The blocks 101, 102; 171, 172 in rows 10 and 17 respectively may have a U-shaped cross-sectional profile (see Fig. 5) and may also be similar to one another. The blocks may have parallel side walls that form the sides of the brick-built wall, wherein one of the remaining sides of the blocks has a recess along its length, whereas the other of said remaining block sides is formed to deflect the flow, as described above.

Figs. 3 and 4 show examples of blocks that can be used in the rows 12-15 between the rows 11, 16 in Fig. 1, and in the rows between the blocks 211, 212 and 251, 252 in Fig. 2.

Fig. 3 shows a block that has two parallel through-penetrating channels which are shown to have a circular cross-section.

Fig. 4 illustrate blocks having a single vertical through-penetrating channel, which is shown to have a circular cross-section.

The slot-like cut-outs shown in Figs. 3 and 4, for instance, are normally not through-penetrating, but are normally included to reduce the weight of the block, particularly when the block is a concrete block.

It will be seen from Figs. 2 and 4 that the channel in the block is essentially centred in the longitudinal direction of the block, in a longitudinal section of said block, and that the block includes a chosen whole number of such longitudinal sections (preferably two), so that it is possible to build-up the wall with relative longitudinal displacement between blocks in adjacent rows.

A horizontal flow through the blocks of row 10 can be led upwards via flow-deflecting blocks 182, 183 which have a mutually intersecting horizontal and vertical through-penetrating flow channel, said channels spreading in the extension plane of the wall. Each of these distribution blocks may have a length corresponding to half the length of the blocks in rows 13-15, so that the vertical channels of mutually joined blocks 182-183 in said row are directed towards the channels in the blocks in rows 13-15. (Fig. 1).

## Claims

1. A system for heating a building that has one or more walls comprising one or more rows (13, 14, 15, 16) comprising first blocks (121, 122, 131-133, 141, 142, 151-153) having through-penetrating holes which form parallel channels in said walls, a bottom row and an upper row (17) (10) of second building blocks (101, 102, 171, 172) that lack through-penetrating holes and that have a longitudinally extending continuous surface (1011, 1021, 1711, 1721), **characterized in that** a row (11,16) of third building blocks (111, 112; 161-163) is interposed between said bottom row (10) and the lowermost row (12) of the first building blocks and between said upper row (17) and the uppermost row of said first blocks, said third blocks (111, 112; 161-163) having a channel which is horizontally extended to connect two adjacent through-penetrating holes in an adjacent row (11,16) of the first blocks (121, 122, 131-133, 141, 144, 151-153), and **in that** the longitudinally extending continuous surfaces (1011-1021; 1711-1721) of the blocks of the bottom row (10) and the upper row (17) face the adjacent row of said third blocks (111, 112, 161-163), whereby a continuous fluid pathway (1312-1332) is formed by a plurality of series-connected sub-pathways (1312, 1321, 1322, 1331, 1332) which are formed by the holes of the first blocks and **in that** a heating/cooling source (180) for heating/cooling the fluid can be connected to said heating/cooling pathway (1312-1332) via a coupling device (182).

2. A system according to Claim 1, **characterised in that** there is connected between the heating/cooling source (180) and the coupling device (182) a control device (181) which includes an electronic unit adapted to control the flow of heating/cooling medium in relation to time, temperature and a program which has been pre-created individually for each specific object in which the system is included.

3. A system according to Claim 1 or 2, **characterised in that** one or more dampers (27) which include a shutter (272) that can be displaced into or out of a frame structure (271) provided with a through-passing hole for said heating/cooling medium is disposed transversely to the heating/cooling pathway (1312-1332 and 221-222-223 respectively), whereby said pathway can be divided into separate heating/cooling zones, and wherein said shutter (272) can be displaced in said frame structure from without.

4. A system according to any of Claims 1-3, **characterised in that** the second building blocks (101, 102, 171, 172) have a U-shaped cross section profile with parallel side walls that form the sides of the wall of the building one of the remaining sides of the second building block (101, 102, 171, 172) has a recess along its length, the opposite of the recess forming the longitudinally extending continuous surface (1011-1021, 1711-1721).

## Patentansprüche

1. System zum Heizen eines Gebäudes, das eine oder mehrere Wände aufweist umfassend eine oder mehrere Reihen (13, 14, 15, 16) umfassend erste Bausteine (121, 122, 131 - 133, 141, 142, 151 - 153) mit hindurch verlaufenden Löchern, welche parallele Kanäle in den Wänden bilden, eine Bodenreihe (10) und eine obere Reihe (17) von zweiten Bausteinen (101, 102, 171, 172), welchen hindurch verlaufende Löcher fehlen und die eine sich längs erstreckende kontinuierliche Oberfläche (1011, 1021, 1711, 1721) aufweisen, **dadurch gekennzeichnet, dass** eine Reihe (11, 16) von dritten Bausteinen (111, 112; 161 - 163), welche zwischen der Bodenreihe (10) und der untersten Reihe (12) der ersten Bausteine angeordnet ist und zwischen der oberen Reihe (17) und der obersten Reihe der ersten Bausteine, wobei die dritten Bausteine (111, 112; 161 - 163) einen Kanal aufweisen, welcher sich horizontal erstreckt um zwei benachbarte hindurch verlaufende Löcher in einer benachbarten Reihe (11, 16) der ersten Bausteine (121, 122, 131 - 133, 141, 144, 151 - 153) zu verbinden, und dass die sich längs erstreckenden kontinuierlichen Oberflächen (1011 - 1021; 1711 - 1721) der Bausteine der Bodenreihe (10) und der oberen Reihe (17) der benachbarten Reihe der dritten Bausteine (111, 112, 161 - 163) gegenüberliegen, wobei ein kontinuierlicher Fluidpfad (1312 - 1332) gebildet ist durch eine Mehrzahl von in Reihe verbundenen Subpfaden (1312, 1321, 1322, 1331, 1332), welche durch Löcher der ersten Bausteine gebildet sind und dass eine Heiz/-Kühl-Quelle (180) zum Heizen/Kühlen des Fluids über eine Kopplungseinrichtung (182) mit dem Heiz/Kühlpfad (1312 - 1332) verbunden werden kann.

2. System nach Anspruch 1, **dadurch gekennzeichnet, dass** zwischen die Heiz/Kühl-Quelle (180) und die Kopplungseinrichtung (182) eine Steuereinrichtung (181) verbunden ist, welche eine elektronische Einheit einschließt, die zum Steuern des Fließens des Heiz/Kühl-Mediums in Bezug auf Zeit, Temperatur angepasst ist sowie ein Programm, welches individuell vorher erzeugt wurde für jedes spezielle Objekt, in welchem das System eingeschlossen ist.

3. System nach Anspruch 1 oder 2, **dadurch gekennzeichnet , dass** ein oder mehrere Schieber (27) quer zu dem Heiz/Kühlpfad (1312 - 1332 bzw. 221 - 222 - 223) angeordnet ist bzw. sind, umfassend einen Verschluss (272), welcher in eine Rahmenstruktur (271) hinein oder heraus verschoben werden kann, wobei die Rahmenstruktur mit einem Durchgangsloch für das Heiz/Kühl-Medium versehen ist, und der Pfad in getrennte Heiz/Kühl-Zonen aufgeteilt werden kann und wobei der Verschluss (272) von außen in der Rahmenstruktur verschoben werden kann.

4. System nach einem der Ansprüche 1 bis 3, **dadurch gekennzeichnet, dass** die zweiten Bausteine (101, 102, 171, 172) ein U-förmiges Querschnittsprofil aufweisen mit parallelen Seitenwänden, welche die Seiten der Wände des Gebäudes bilden, wobei eine der verbleibenden Seiten der zweiten Bausteine (101, 102, 171, 172) einen Einschnitt entlang ihrer Länge besitzt, wobei das gegenüberliegende des Einschnittes die sich längs erstreckende kontinuierliche Oberfläche (1011 - 1021, 1711 - 1721) bildet.

## Revendications

1. Un dispositif de chauffage d'une construction qui comprend une ou plusieurs parois comportant une ou plusieurs rangées (13, 14, 15, 16) comprenant des premiers blocs (121, 122, 131-133, 141, 142, 151-153) ayant des trous traversants qui forment des canaux parallèles dans lesdites parois, une rangée de fond (10) et une rangée supérieure (17) de deuxièmes blocs de construction (101, 102, 171, 172) ne comportant pas de trous traversants et qui ont une surface continue se prolongeant longitudinalement (1011, 1021, 1711, 1721), **caractérisé en ce qu'**une rangée (11, 16) des troisièmes blocs de construction (111, 112, 161-163) est interposée entre ladite rangée de fond (10) et la rangée la plus inférieure (12) des premiers blocs de construction et entre ladite rangée supérieure (17) et la rangée la plus supérieure desdits premiers blocs, lesdits troisièmes blocs (111, 112, 161-163) ayant un canal qui se prolonge horizontalement pour relier deux trous traversants contigus dans une rangée contiguë (11, 16) des premiers blocs (121, 122, 131-133, 141, 144, 151-153) et **en ce que** les surfaces continues se prolongeant longitudinalement (1011-1021, 1711-1721) des blocs de la rangée de fond (10) et de la rangée supérieure (17) sont en regard de la rangée contiguë desdits troisièmes blocs (111, 112, 161-163) de sorte qu'un trajet de fluide continu (1312-1332) est formé par une pluralité de sous-trajets reliés en séries (1312, 1321, 1322, 1331, 1332) qui sont formés par les trous des premiers blocs et **en ce qu'**une source de chauffage/refroidissement (180) pour chauffer/ refroidir le fluide peut être reliée audit trajet de chauffage/refroidissement (1312-1322) par l'intermédiaire d'un dispositif de couplage (182).

2. Un dispositif selon la revendication 1, **caractérisé en ce qu'**un dispositif de commande (180) est relié entre la source de chauffage/refroidissement (180) et le dispositif de couplage (182), lequel comprend une unité électronique agencée pour réguler l'écoulement du milieu de chauffage/refroidissement en fonction du temps, de la température et d'un programme qui a été précréé individuellement pour chaque objet spécifique dans lequel le dispositif est incorporé.

3. Un dispositif selon la revendication 1 ou 2, **caractérisé en ce qu'**un ou plusieurs amortisseurs (27) qui comporte/comportent un obturateur (272) qui peut être déplacé à l'intérieur ou à l'extérieur d'une structure de châssis (271) prévue avec un trou traversant pour ledit milieu de chauffage/refroidissement est/sont disposé(s) transversalement au trajet de chauffage/refroidissement (1312-1332 et respectivement 221-222-223) de sorte que ledit trajet peut être divisé selon des zones séparées de chauffage/refroidissement et dans lequel ledit obturateur (272) peut être déplacé dans ladite structure de châssis de l'extérieur.

4. Un dispositif selon l'une quelconque des revendications 1 à 3, **caractérisé en ce que** les deuxièmes blocs de construction (101, 102, 171, 172) ont un profil de section transversale en forme de U avec des parois latérales parallèles qui forment les côtés de la paroi des blocs de construction, l'un des côtés restants du deuxième bloc de construction (101, 102, 171, 172) présente un évidement le long de sa longueur, le côté opposé de l'évidement formant la surface continue se prolongeant longitudinalement (1011-1021, 1711-1721).
